# EUROPEAN PATENT APPLICATION

(11) **EP 4 792 907 A1**
(43) Date of publication of application: **19.08.2026**
(21) Application number: 25817735.1
(22) Date of filing: 16.01.2025
(51) Int. Cl.: B01D 15/08, B01D 15/42, B01D 15/16, B01D 15/18, B01D 1/00, B01D 1/30, G21F 9/12, G21F 9/08

(54) **GENERATOR FOR SEPARATING YTTRIUM [90Y] FROM STRONTIUM [90SR]-CONTAINING MOTHER LIQUOR, AND SEPARATION METHOD**

(30) Priority: 24.12.2024 CN 202411919991
(71) Applicant: Mednovo Group Co. Ltd, Suzhou, Jiangsu 215163 (CN)
(72) Inventor: LI, Peishang, Suzhou, Jiangsu 215163 (CN); KONG, Xiangsheng, Suzhou, Jiangsu 215163 (CN)
(74) Representative: Alatis
(86) International application number: PCT/CN2025/072732
(87) International publication number: WO 2026/137541

(57) **Abstract**

This application relates to the technical field of isotopes, particularly related to a generator and a method for separating yttrium [⁹⁰Y] from a strontium [⁹⁰Sr]-containing mother liquor. The method includes the following steps: loading the strontium [⁹⁰Sr]-containing mother liquor on a resin separation column; rinsing with a rinsing solution, and collecting a strontium [⁹⁰Sr]-containing rinsing solution; draining a liquid in the resin separation column with air; subjecting the strontium [⁹⁰Sr]-containing rinsing solution to evaporation at a temperature of 85°C to 95°C and dissolution, and leaving to stand, collecting a strontium [⁹⁰Sr]-yttrium [⁹⁰Y] rinsing solution, and adding the strontium [⁹⁰Sr]-yttrium [⁹⁰Y] rinsing solution to the strontium [⁹⁰Sr]-containing mother liquor for recycling; and eluting with an eluent, and collecting an yttrium [⁹⁰Y]-containing eluate. By adjusting an evaporation temperature for the strontium [⁹⁰Sr]-containing rinsing solution, this application can greatly avoid the loss of strontium [⁹⁰Sr] without adversely affecting a separation effect of yttrium [⁹⁰Y].

## Description

### RELATED APPLICATION

The present application claims priority to Chinese Patent Application No. 2024119199913 filed on December 24, 2024 and entitled "GENERATOR AND METHOD FOR SEPARATING YTTRIUM [90Y] FROM STRONTIUM [90Sr]-CONTAINING MOTHER LIQUOR".

### TECHNICAL FIELD

The present disclosure relates to the technical field of isotopes, and specifically relates to a generator and a method for separating yttrium [⁹⁰Y] from a strontium [⁹⁰Sr]-containing mother liquor.

### BACKGROUND

Yttrium [⁹⁰Y] is a pure β-radionuclide with a half-life of 64 h. β-rays emitted due to the decay of yttrium [⁹⁰Y] have a maximum energy of 2.28 MeV. ⁹⁰Zr, a decay product of yttrium [⁹⁰Y], is stable and non-toxic, and demonstrates no adverse impact on the human body. Moreover, yttrium [⁹⁰Y] exhibits excellent chelation properties, and enables the easy labeling of monoclonal antibodies, microspheres, polypeptides, etc. for *in vivo* radiotherapy of cancer. Radioactive microspheres containing yttrium [⁹⁰Y] have a very small radiation radius. The injection of radioactive microspheres of yttrium [⁹⁰Y] into the liver through an interventional procedure can provide continuous radiotherapy against all liver cancer cells, resulting in the necrosis of cancer cells. Further, due to an extremely small radiation radius, each microsphere causes almost no damage to surrounding healthy tissues. This precision radiotherapy approach can effectively eradicate cancer cells while causing minimal damage to healthy tissues. Therefore, the production of medical yttrium [⁹⁰Y] nuclides holds significant importance for radiotherapy of liver cancer.

The production approaches for medical yttrium [⁹⁰Y] nuclides primarily include nuclear reactors, nuclide generators, accelerators, etc. The production of yttrium [⁹⁰Y] using a strontium [⁹⁰Sr]-yttrium [⁹⁰Y] generator has advantages including simple and rapid operations and location-independent use. Notably, the raw material strontium [⁹⁰Sr] is a fission product of ²³⁵U, and can be acquired from a spent fuel cooled for a long time. This method is currently the predominant approach for producing yttrium [⁹⁰Y]. The preparation methods of strontium [⁹⁰Sr]-yttrium [⁹⁰Y] generators mainly include extraction, chromatography, precipitation, electrodeposition, and liquid membrane techniques. However, these techniques have problems such as complicated operations and generation of a substantial amount of a radioactive waste liquid. The parent yttrium [⁹⁰Y] is a highly-toxic, osteo-seeking nuclide with a long half-life of 28.5 years, and the absorption of yttrium [⁹⁰Y] in human bones is strictly restricted. Consequently, high requirements are imposed on the separation between strontium [⁹⁰Sr] and yttrium [⁹⁰Y]. At present, the mature technologies for separating yttrium [⁹⁰Y] from strontium [⁹⁰Sr] are predominantly controlled by countries outside China. The production and supply of yttrium [⁹⁰Y] in China entirely depend on imports. Therefore, the development of strontium [⁹⁰Sr]-yttrium[⁹⁰Y] generators with independent Chinese intellectual property rights is of great significance.

The existing generators for separating yttrium [⁹⁰Y] from a strontium [⁹⁰Sr]-containing mother liquor mainly face issues such as low recovery rate of strontium [⁹⁰Sr], high strontium [⁹⁰Sr]-yttrium [⁹⁰Y] radioactivity in an yttrium [⁹⁰Y]-containing eluate, and short service life of a generator.

### SUMMARY

In order to solve the above technical problems, the present disclosure provides a generator and a method for separating yttrium [⁹⁰Y] from a strontium [⁹⁰Sr]-containing mother liquor. In the present disclosure, by adjusting an evaporation temperature for a strontium [⁹⁰Sr]-containing rinsing solution, the loss of strontium [⁹⁰Sr] is greatly avoided, without adversely affecting a separation effect of yttrium [⁹⁰Y].

Accordingly, the present disclosure provides the following technical solutions:

In a first aspect, in an optional embodiment, the present disclosure provides a method for separating yttrium [⁹⁰Y] from a strontium [⁹⁰Sr]-containing mother liquor, including the following steps:
S1, allowing the strontium [⁹⁰Sr]-containing mother liquor to flow through a resin separation column, such that yttrium [⁹⁰Y] in the strontium [⁹⁰Sr]-containing mother liquor is adsorbed; rinsing off strontium [⁹⁰Sr] on the resin separation column with a rinsing solution, and collecting a strontium [⁹⁰Sr]-containing rinsing solution; and draining a liquid in the resin separation column with air;
S2, subjecting the strontium [⁹⁰Sr]-containing rinsing solution to evaporation at a temperature of 85°C to 95°C to produce a crystal of strontium [⁹⁰Sr]; dissolving the crystal with the rinsing solution, and leaving a resulting solution to stand for 8 days to 12 days; and collecting a corresponding rinsing solution, and adding the corresponding rinsing solution to the strontium [⁹⁰Sr]-containing mother liquor for recycling; and
S3, eluting the yttrium [⁹⁰Y] from the resin separation column with an eluent, and collecting an yttrium [⁹⁰Y]-containing eluate,
where in the yttrium [⁹⁰Y]-containing eluate, a strontium [⁹⁰Sr]-yttrium [⁹⁰Y] radioactivity ratio is lower than 10⁻⁶.

The evaporation of the strontium [⁹⁰Sr]-containing rinsing solution for recovery would cause the loss of strontium [⁹⁰Sr]. In the present disclosure, by adjusting an evaporation temperature for the strontium [⁹⁰Sr]-containing rinsing solution, the loss of strontium [⁹⁰Sr] is greatly avoided, without adversely affecting a separation effect of yttrium [⁹⁰Y].

In some embodiments, the method further includes: subjecting the yttrium [⁹⁰Y]-containing eluate to adsorption with at least one resin separation column, eluting with the eluent, and collecting a purified yttrium [⁹⁰Y]-containing eluate. In some embodiments, in the purified yttrium [⁹⁰Y]-containing eluate produced after subjecting the yttrium [⁹⁰Y]-containing eluate to adsorption with one resin separation column and eluting with the eluent, a strontium [⁹⁰Sr]-yttrium [⁹⁰Y] radioactivity ratio is lower than 10⁻⁷. In some embodiments, in the purified yttrium [⁹⁰Y]-containing eluate produced after subjecting the yttrium [⁹⁰Y]-containing eluate adsorption with two resin separation columns and eluting with the eluent, a strontium [⁹⁰Sr]-yttrium [⁹⁰Y] radioactivity ratio is lower than 10⁻⁸.

In the present disclosure, by purifying the yttrium [⁹⁰Y]-containing eluate multiple times, a strontium [⁹⁰Sr]-yttrium [⁹⁰Y] radioactivity in the yttrium [⁹⁰Y]-containing eluate can be reduced.

In some embodiments, a total volume of the rinsing solution used is at least 11 times a volume of the resin separation column; the rinsing is conducted at a rate of 0.25 mL/min to 1 mL/min; the rinsing solution has a concentration of 1 mol/L, and the rinsing solution is one selected from the group consisting of nitric acid, sulfuric acid, and hydrochloric acid; and the eluent has a concentration of 8 mol/L, and the eluent is one selected from the group consisting of nitric acid, sulfuric acid, and hydrochloric acid.

In a second aspect, in an optional embodiment, the present disclosure provides a generator for separating yttrium [⁹⁰Y] from a strontium [⁹⁰Sr]-containing mother liquor, including a mother liquor tank, a rinsing tank, a first elution tank, a second elution tank, an automatic separation device, and an evaporation-recovery device, where
the automatic separation device includes a first separation column, a communication device, a first injection pump, and a second injection pump;
the communication device is configured to selectively communicate with the mother liquor tank, the rinsing tank, the first elution tank, the second elution tank, the first separation column, the first injection pump, and the second injection pump;
the mother liquor tank is configured to supply the strontium [⁹⁰Sr]-containing mother liquor to the first separation column such that yttrium [⁹⁰Y] in the strontium [⁹⁰Sr]-containing mother liquor is adsorbed on the first separation column;
the first injection pump is configured to draw a rinsing solution from the rinsing tank to rinse the first separation column such that strontium [⁹⁰Sr] adsorbed on the first separation column is rinsed off and delivered in a solution form to the evaporation-recovery device;
the second injection pump is configured to draw an eluent from the first elution tank to conduct elution on the first separation column such that yttrium [⁹⁰Y] adsorbed on the first separation column is eluted and delivered in a solution form to the second elution tank; and
a resin in the first separation column is a CL-P204 extraction chromatographic resin with a pore size of 80 mesh to 150 mesh.

In the present disclosure, when the CL-P204 extraction chromatographic resin is selected as a separation resin in the first separation column, yttrium [⁹⁰Y] can be completely adsorbed on the resin, while strontium [⁹⁰Sr] flows out directly. Due to the extremely-low chemical quantity of yttrium [⁹⁰Y], the consumption of the resin can be greatly reduced, and the corresponding separation column and the local shielding device can be designed in a more concentrated manner. Additionally, the direct outflow of strontium [⁹⁰Sr] results in small radiation exposure to the resin material, thereby increasing the service life of the strontium [⁹⁰Sr]-yttrium [⁹⁰Y] generator.

In some embodiments, the evaporation-recovery device includes a liquid inlet pipe, an evaporation dish, a baffle plate, a liquid outlet, and a heating device; the baffle plate is located inside the evaporation dish and is configured to prevent splashing of a strontium [⁹⁰Sr]-containing solution during evaporation, and the baffle plate is provided with a small hole to discharge a gas resulted from evaporation; the liquid inlet pipe penetrates through the baffle plate; one end of the liquid inlet pipe is connected to the communication device and the rinsing tank, and the other end of the liquid inlet pipe is suspended above a bottom of the evaporation dish; the liquid outlet is configured at a side of an outer surface of the evaporation dish and is connected to the mother liquor tank; and the heating device is located at the bottom of the evaporation dish and is configured to heat a strontium [⁹⁰Sr]-containing solution in the evaporation dish.

In some embodiments of the present disclosure, after flowing to the evaporation-recovery device, a strontium [⁹⁰Sr]-containing effluent is concentrated and transformed, and then flows back to the automatic separation device directly for the subsequent separation of strontium [⁹⁰Sr] and yttrium [⁹⁰Y]. In this way, a high recovery rate of strontium [⁹⁰Sr] can be guaranteed to extend the service life of the strontium [⁹⁰Sr]-yttrium [⁹⁰Y] generator.

In some embodiments, the communication device includes a first six-way valve, a second six-way valve, and a third six-way valve, where the first six-way valve has a common port C connected to a liquid inlet of the first separation column, a port 1# connected to a port 1# of the second six-way valve, a port 2# connected to the first elution tank through the second injection pump, a port 3# connected to a port 3# of the second six-way valve, a port 4# connected to the rinsing tank through the first injection pump, a port 5# connected to air, and a port 6# connected to a port 4# of the second six-way valve; the second six-way valve has a port 2# connected to the mother liquor tank, and a common port C connected to the liquid inlet of the first separation column; and the third six-way valve has a common port C connected to a liquid outlet of the first separation column, a port 1# connected to the liquid inlet pipe of the evaporation-recovery device, and a port 2# connected to the second elution tank.

In some embodiments of the present disclosure, central bores of the first six-way valve, the second six-way valve, and the third six-way valve serve as common passages. The switching among a plurality of flow paths can be achieved through a rotor to enable that different solutions alternatingly flow. A flow path has a diameter of 1.2 mm. A capacity from one port to another port is 27.5 µL. A capacity of a rotor slot is 5.41 µL. A liquid-contact material for these valves is polychlorotrifluoroethylene or sapphire. A piping interface is a 1/4-28UNF threaded interface. A switching time is less than 4 seconds (s) per revolution. A maximum driving force is 4 N/m. The first injection pump and the second injection pump are designed to have a liquid volume accuracy error of less than 1% and a liquid volume repeatability error of 0.3% to 0.5%. According to actual service conditions, sample injectors with different specifications of 50 µL to 10 mL can be selected, a piping interface is a 1/4-28UNF threaded interface, and a rated stroke running time is 2 s to 12,000 s (with pure water as a medium). Components that need to be controlled by a control unit include the first six-way valve, the second six-way valve, the third six-way valve, the first injection pump, and the second injection pump. Hardware involved includes a 485 hub and a miniature touchscreen. The first six-way valve, the second six-way valve, the third six-way valve, the first injection pump, and the second injection pump communicate with each other through the 485 hub and the miniature touchscreen. An upper computer software sends a control command to the 485 hub through a serial port of a computer, and then the control command is sent by the 485 hub to each device, thereby achieving the control of each device. A sealing material for an upper cover of the first separation column is a thermoplastic polyurethane elastomer rubber, and a middle thread of the sealing material is made of a polyetheretherketone material.

In some embodiments, the generator further includes at least one separation column configured to conduct a further elution by using an yttrium [⁹⁰Y]-containing solution produced from elution on the first separation column; a liquid inlet of each separation column is connected to the first elution tank; and a resin in each of the at least one separation column is a CL-P204 extraction chromatographic resin.

In some embodiments of the present disclosure, yttrium [⁹⁰Y] adsorbed on the first separation column is eluted to produce an yttrium [⁹⁰Y]-containing eluate as a [⁹⁰Y] crude product, and the yttrium [⁹⁰Y]-containing eluate further flows through at least one separation column. The selected CL-P204 extraction chromatographic resin can adsorb a trace amount of impurities in the yttrium [⁹⁰Y]-containing eluate to achieve the further purification of the yttrium [⁹⁰Y] crude product, thereby increasing the radiochemical purity of yttrium [⁹⁰Y] in a product. The recovery rate of strontium [⁹⁰Sr] can also be improved without adversely affecting a separation effect of yttrium [⁹⁰Y].

In some embodiments, the generator further includes a control unit; the control unit is in a signal connection with the communication device, the first injection pump, and the second injection pump; a liquid-contact material for the communication device is one selected from the group consisting of PCTEF and sapphire; a material of the evaporation dish is polyetheretherketone; and the first injection pump and the second injection pump each have a liquid volume accuracy error of less than 1%.

In the present disclosure, the control unit can achieve the control of different liquid flow rates and directions by controlling each communication device and each injection pump, thereby enabling the remote implementation of separation and recovery processes, ensuring a separation effect, and reducing the radiation exposure to personnel.

Compared with the prior art, some embodiments of the present disclosure have the following beneficial effects:
1. In the present disclosure, when the extraction chromatographic resin is selected as a separation resin in the first separation column, yttrium [⁹⁰Y] can be completely adsorbed on the resin, while strontium [⁹⁰Sr] flows out directly. Due to the extremely-low chemical quantity of yttrium [⁹⁰Y], the consumption of the resin can be greatly reduced, and the corresponding separation column and the local shielding device can be designed in a more concentrated manner. Additionally, the direct outflow of strontium [⁹⁰Sr] results in small radiation exposure to the resin material, thereby increasing the service life of the strontium [⁹⁰Sr]-yttrium [⁹⁰Y] generator.
2. After flowing to the evaporation-recovery device, a strontium [⁹⁰Sr]-containing effluent is concentrated and transformed, and then flows back to the automatic separation device directly for the subsequent separation of strontium [⁹⁰Sr] and yttrium [⁹⁰Y]. In this way, a high recovery rate of strontium [⁹⁰Sr] can be guaranteed to extend the service life of the strontium [⁹⁰Sr]-yttrium [⁹⁰Y] generator.
3. For the automatic separation device, the control unit is used to control each six-way valve and each injection pump to achieve the control of different liquid flow rates and directions, thereby enabling the remote implementation of separation and recovery processes, ensuring a separation effect, and reducing the radiation exposure to personnel.
4. In the present disclosure, yttrium [⁹⁰Y] adsorbed on the first separation column is eluted to produce an yttrium [⁹⁰Y]-containing eluate as an yttrium [⁹⁰Y] crude product, and the yttrium [⁹⁰Y]-containing eluate further flows through a second separation column. The selected extraction chromatographic resin can adsorb a trace amount of impurities in the yttrium [⁹⁰Y]-containing eluate to achieve the further purification of the yttrium [⁹⁰Y]-containing crude product, thereby increasing the radiochemical purity of yttrium [⁹⁰Y] in a product.

### BRIEF DESCRIPTION OF THE DRAWINGS

To describe the technical solutions in the embodiments of the present disclosure clearly, the accompanying drawings required for the embodiments are briefly described below. Apparently, the accompanying drawings in the following description show merely some embodiments of the present disclosure, and those of ordinary skill in the art may still derive other accompanying drawings from these accompanying drawings without creative efforts.
FIG. 1 shows a schematic diagram of the generator in Example 1 of the present disclosure;
FIG. 2 shows a schematic diagram of the generator in Example 2 of the present disclosure;
FIG. 3 shows a schematic diagram of the generator in Example 3 of the present disclosure; and

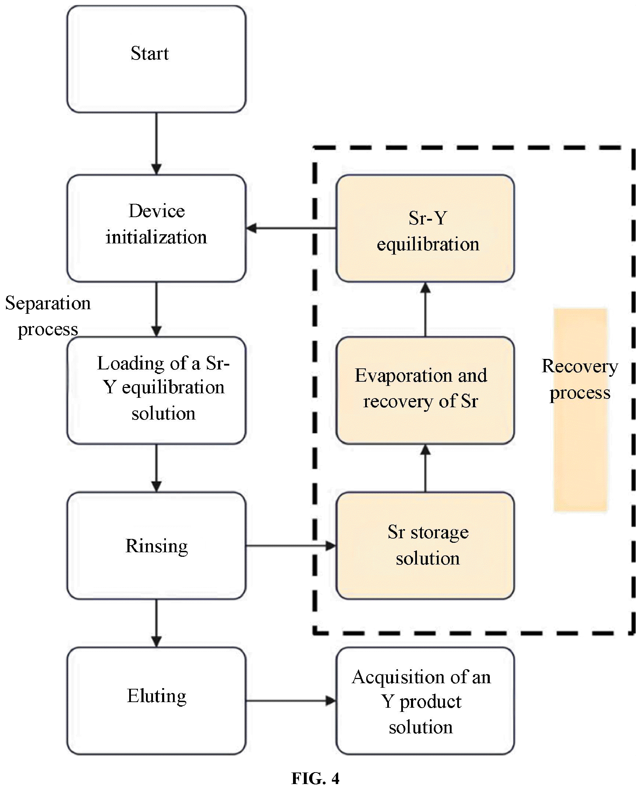

FIG. 4 shows a schematic flowchart of the method in Example 4 of the present disclosure.

Reference signs: 1-mother liquor tank; 2-rinsing tank; 3-first elution tank; 4-second elution tank; 5-first six-way valve; 6-second six-way valve; 7-third six-way valve; 8-first separation column; 9-first injection pump; 10-second injection pump; 11-evaporation dish; 12-baffle plate; 13-small hole(s); 14-liquid inlet pipe; 15-liquid outlet; 16-heating device; 17-second separation column; and 18-third separation column.

### DETAILED DESCRIPTION OF THE EMBODIMENTS

To make the objects, technical solutions, and advantages of the present disclosure comprehensible, the present disclosure will be further described in detail below in conjunction with specific examples. It should be understood that the specific examples described here are merely intended to explain the present disclosure, rather than to limit the present disclosure.

Quality standards for a strontium [⁹⁰Sr]-containing mother liquor in a mother liquor tank are listed in Table 1:

**Table 1 Quality standards**

| Test item | | Acceptance standard |
|---|---|---|
| α impurity content | | <1×10⁻⁶ Bq/Bq ⁹⁰Sr |
| β impurity content | | <1×10⁻⁶ Bq/Bq ⁹⁰Sr |
| γ impurity content | | <1×10⁻⁵ Bq/Bq ⁹⁰Sr |
| Radiochemical purity | | >99% |
| ⁸⁹Sr content | | <1.0% |
| Metal impurity content (not greater than µg/Ci ⁹⁰Sr) | Cd | ≤ 0.6 (µg/GBq) |
| | Cu | ≤ 0.6 (µg/GBq) |
| | Fe | ≤ 6.0 (µg/GBq) |
| | Pb | ≤ 3.0 (µg/GBq) |
| | Zn | ≤ 3.0 (µg/GBq) |

### Example 1

In this example, a generator for separating yttrium [⁹⁰Y] from a strontium [⁹⁰Sr]-containing mother liquor is provided, including (composed of) a mother liquor tank 1, a rinsing tank 2, a first elution tank 3, a second elution tank 4, an automatic separation device, an evaporation-recovery device, and a control unit.

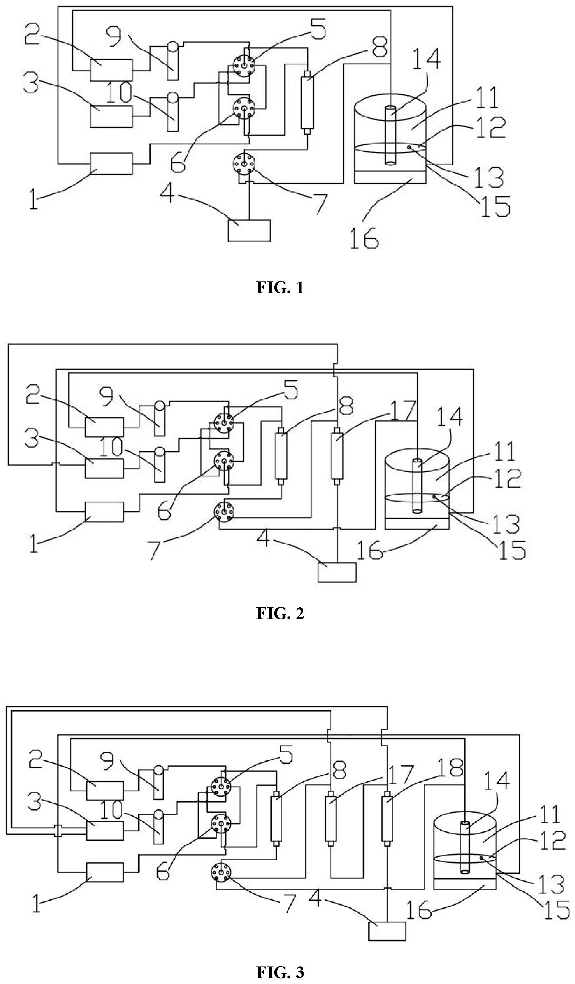

As shown in FIG. 1, the automatic separation device includes (is composed of) a first separation column 8, a communication device, a first injection pump 9, and a second injection pump 10. The communication device includes (are composed of) a first six-way valve 5, a second six-way valve 6, and a third six-way valve 7. A resin in the first separation column 8 is a CL-P204 extraction chromatographic resin. The mother liquor tank 1 is configured to supply the strontium [⁹⁰Sr]-containing mother liquor to the first separation column 8 such that yttrium [⁹⁰Y] in the strontium [⁹⁰Sr]-containing mother liquor is adsorbed on the first separation column 8. The first injection pump 9 is configured to draw a rinsing solution from the rinsing tank 2 to rinse the first separation column 8 such that strontium [⁹⁰Sr] adsorbed on the first separation column 8 is rinsed off and delivered in a solution form to the evaporation-recovery device. The second injection pump 10 is configured to draw an eluent from the first elution tank 3 to conduct elution on the first separation column 8 such that yttrium [⁹⁰Y] adsorbed on the first separation column 8 is eluted and delivered in a solution form to the second elution tank 4.

The first six-way valve 5, the second six-way valve 6, and the third six-way valve 7 are configured to selectively communicate the mother liquor tank 1, the rinsing tank 2, the first elution tank 3, the second elution tank 4, the first separation column 8, the first injection pump 9, and the second injection pump 10. Specifically, the first six-way valve 5 has a common port C connected to a liquid inlet of the first separation column 8, a port 1# connected to a port 1# of the second six-way valve 6, a port 2# connected to the first elution tank 3 through the second injection pump 10, a port 3# connected to a port 3# of the second six-way valve 6, a port 4# connected to the rinsing tank 2 through the first injection pump 8, a port 5# connected to air, and a port 6# connected to a port 4# of the second six-way valve 6. The second six-way valve 6 has a port 2# connected to the mother liquor tank 1, and a common port C connected to the liquid inlet of the first separation column 8. A common port C of the third six-way valve 7 is connected to a liquid outlet of the first separation column 8, a port 1# of the third six-way valve 7 is connected to a liquid inlet pipe 14 of the evaporation-recovery device, and a port 2# of the third six-way valve 7 is connected to the second elution tank 4. Central bores of the first six-way valve 5, the second six-way valve 6, and the third six-way valve 7 serve as common passages. The switching among a plurality of flow paths can be achieved through a rotor to enable that different solutions alternatingly flow through. A flow path has a diameter of 1.2 mm. A capacity from one port to another port is 27.5 µL. A capacity of a rotor slot is 5.41 µL. A liquid-contact material for these valves is PCTEF or sapphire. A piping interface is a 1/4-28UNF threaded interface. A switching time is less than 4 seconds (s) per revolution. A maximum driving force is 4 N/m. The first injection pump and the second injection pump are designed to have a liquid volume accuracy error of less than 1% and a liquid volume repeatability error of 0.3% to 0.5%. According to actual service conditions, sample injectors with different specifications of 50 µL to 10 mL can be selected, a piping interface is a 1/4-28UNF threaded interface, and a rated stroke running time is 2 s to 12,000 s (with pure water as a medium). Components that need to be controlled by the control unit include the first six-way valve 5, the second six-way valve 6, the third six-way valve 7, the first injection pump 9, and the second injection pump 10. Hardware involved includes a 485 hub and a miniature touchscreen. The first six-way valve 5, the second six-way valve 6, the third six-way valve 7, the first injection pump 9, and the second injection pump 10 communicate with each other through the 485 hub and the miniature touchscreen. An upper computer software sends a control command to the 485 hub through a serial port of a computer, and then the control command is sent by the 485 hub to each device, thereby achieving the control of each device. A sealing material for an upper cover of the first separation column 8 is a thermoplastic polyurethane elastomer rubber, and a middle thread of the sealing material is made of a polyetheretherketone material.

The evaporation-recovery device includes (is composed of) a liquid inlet pipe 14, an evaporation dish 11, a baffle plate 12, a liquid outlet 15, and a heating device 16. The baffle plate 12 is located inside the evaporation dish 11 and is configured to prevent splashing of a strontium [⁹⁰Sr] solution during evaporation, and the baffle plate 12 is provided with small hole(s) 13 to discharge a gas resulted from evaporation. The liquid inlet pipe 14 penetrates through the baffle plate 12. One end of the liquid inlet pipe 14 is connected to the communication device and the rinsing tank 2, and the other end of the liquid inlet pipe 14 is suspended above a bottom of the evaporation dish 11. The liquid outlet 15 is configured at a side of an outer surface of the evaporation dish 11 and is connected to the mother liquor tank 1. The heating device 16 is located at the bottom of the evaporation dish 11 and is configured to heat a strontium [⁹⁰Sr] solution in the evaporation dish 11.

The control unit is in a signal connection with the first six-way valve 5, the second six-way valve 6, the third six-way valve 7, the first injection pump 9, and the second injection pump 10.

### Example 2

In this example, a generator for separating yttrium [⁹⁰Y] from a strontium [⁹⁰Sr]-containing mother liquor is provided, including (composed of) a mother liquor tank 1, a rinsing tank 2, a first elution tank 3, a second elution tank 4, an automatic separation device, an evaporation-recovery device, a second separation column 17, and a control unit.

As shown in FIG. 1, the automatic separation device includes (is composed of) a first separation column 8, a communication device, a first injection pump 9, and a second injection pump 10. The communication device includes (are composed of) a first six-way valve 5, a second six-way valve 6, and a third six-way valve 7. A resin in the first separation column 8 is a CL-P204 extraction chromatographic resin. The mother liquor tank 1 is configured to supply the strontium [⁹⁰Sr]-containing mother liquor to the first separation column 8 such that yttrium [⁹⁰Y] in the strontium [⁹⁰Sr]-containing mother liquor is adsorbed on the first separation column 8. The first injection pump 9 is configured to draw a rinsing solution from the rinsing tank 2 to rinse the first separation column 8 such that strontium [⁹⁰Sr] adsorbed on the first separation column 8 is rinsed off and delivered in a solution form to the evaporation-recovery device. The second injection pump 10 is configured to draw an eluent from the first elution tank 3 to conduct elution on the first separation column 8 such that yttrium [⁹⁰Y] adsorbed on the first separation column 8 is eluted and delivered in a solution form to the second elution tank 4.

The first six-way valve 5, the second six-way valve 6, and the third six-way valve 7 are configured to selectively communicate the mother liquor tank 1, the rinsing tank 2, the first elution tank 3, the second elution tank 4, the first separation column 8, the first injection pump 9, and the second injection pump 10. Specifically, the first six-way valve 5 has a common port C connected to a liquid inlet of the first separation column 8, a port 1# connected to a port 1# of the second six-way valve 6, a port 2# connected to the first elution tank 3 through the second injection pump 10, a port 3# connected to a port 3# of the second six-way valve 6, a port 4# connected to the rinsing tank 2 through the first injection pump 8, a port 5# connected to air, and a port 6# connected to a port 4# of the second six-way valve 6. The second six-way valve 6 has a port 2# connected to the mother liquor tank 1, and a common port C connected to the liquid inlet of the first separation column 8. A common port C of the third six-way valve 7 is connected to a liquid outlet of the first separation column 8, a port 1# of the third six-way valve 7 is connected to a liquid inlet pipe 14 of the evaporation-recovery device, and a port 2# of the third six-way valve 7 is connected to a liquid inlet of the second separation column 17. Central bores of the first six-way valve 5, the second six-way valve 6, and the third six-way valve 7 serve as common passages. The switching among a plurality of flow paths can be achieved through a rotor to enable that different solutions alternatingly flow through. A flow path has a diameter of 1.2 mm. A volume from one port to another port is 27.5 µL. A capacity of a rotor slot is 5.41 µL. A liquid-contact material for these valves is PCTEF or sapphire. A piping interface is a 1/4-28UNF threaded interface. A switching time is less than 4 seconds (s) per revolution. A maximum driving force is 4 N/m. The first injection pump and the second injection pump are designed to have a liquid volume accuracy error of less than 1% and a liquid volume repeatability error of 0.3% to 0.5%. According to actual service conditions, sample injectors with different specifications of 50 µL to 10 mL can be selected, a piping interface is a 1/4-28UNF threaded interface, and a rated stroke running time is 2 s to 12,000 s (with pure water as a medium). Components that need to be controlled by the control unit include the first six-way valve 5, the second six-way valve 6, the third six-way valve 7, the first injection pump 9, and the second injection pump 10. Hardware involved includes a 485 hub and a miniature touchscreen. The first six-way valve 5, the second six-way valve 6, the third six-way valve 7, the first injection pump 9, and the second injection pump 10 communicate with each other through the 485 hub and the miniature touchscreen. An upper computer software sends a control command to the 485 hub through a serial port of a computer, and then the control command is sent by the 485 hub to each device, thereby achieving the control of each device. A sealing material for an upper cover of the first separation column 8 is a thermoplastic polyurethane elastomer rubber, and a middle thread of the sealing material is made of a polyetheretherketone material.

The evaporation-recovery device includes (is composed of) a liquid inlet pipe 14, an evaporation dish 11, a baffle plate 12, a liquid outlet 15, and a heating device 16. The baffle plate 12 is located inside the evaporation dish 11 and is configured to prevent splashing of a strontium [⁹⁰Sr] solution during evaporation, and the baffle plate 12 is provided with small hole(s) 13 to discharge a gas resulted from evaporation. The liquid inlet pipe 14 penetrates through the baffle plate 12. One end of the liquid inlet pipe 14 is connected to the communication device and the rinsing tank 2, and the other end of the liquid inlet pipe 14 is suspended above a bottom of the evaporation dish 11. The liquid outlet 15 is configured at a side of an outer surface of the evaporation dish 11 and is connected to the mother liquor tank 1. The heating device 16 is located at the bottom of the evaporation dish 11 and is configured to heat a strontium [⁹⁰Sr] solution in the evaporation dish 11.

The control unit is in a signal connection with the first six-way valve 5, the second six-way valve 6, the third six-way valve 7, the first injection pump 9, and the second injection pump 10.

The liquid inlet of the second separation column 17 is connected with the first elution tank 3 and the port 2# of the third six-way valve 5, and a liquid outlet of the second separation column 17 is connected with the second elution tank 4. A resin in the second separation column 17 is a CL-P204 extraction chromatographic resin.

### Example 3

In this example, a generator for separating yttrium [⁹⁰Y] from a strontium [⁹⁰Sr]-containing mother liquor is provided, including (composed of) a mother liquor tank 1, a rinsing tank 2, a first elution tank 3, a second elution tank 4, an automatic separation device, an evaporation-recovery device, a second separation column 17, a third separation column 18, and a control unit.

As shown in FIG. 1, the automatic separation device includes (is composed of) a first separation column 8, a communication device, a first injection pump 9, and a second injection pump 10. The communication device includes (are composed of) a first six-way valve 5, a second six-way valve 6, and a third six-way valve 7. A resin in the first separation column 8 is a CL-P204 extraction chromatographic resin. The mother liquor tank 1 is configured to supply the strontium [⁹⁰Sr]-containing mother liquor to the first separation column 8 such that yttrium [⁹⁰Y] in the strontium [⁹⁰Sr]-containing mother liquor is adsorbed on the first separation column 8. The first injection pump 9 is configured to draw a rinsing solution from the rinsing tank 2 to rinse the first separation column 8 such that strontium [⁹⁰Sr] adsorbed on the first separation column 8 is rinsed off and delivered in a solution form to the evaporation-recovery device. The second injection pump 10 is configured to draw an eluent from the first elution tank 3 to conduct elution on the first separation column 8 such that yttrium [⁹⁰Y] adsorbed on the first separation column 8 is eluted and delivered in a solution form to the second elution tank 4.

The first six-way valve 5, the second six-way valve 6, and the third six-way valve 7 are configured to selectively communicate the mother liquor tank 1, the rinsing tank 2, the first elution tank 3, the second elution tank 4, the first separation column 8, the first injection pump 9, and the second injection pump 10. Specifically, the first six-way valve 5 has a common port C connected to a liquid inlet of the first separation column 8, a port 1# connected to a port 1# of the second six-way valve 6, a port 2# connected to the first elution tank 3 through the second injection pump 10, a port 3# connected to a port 3# of the second six-way valve 6, a port 4# connected to the rinsing tank 2 through the first injection pump 8, a port 5# connected to air, and a port 6# connected to a port 4# of the second six-way valve 6. The second six-way valve 6 has a port 2# connected to the mother liquor tank 1, and a common port C connected to the liquid inlet of the first separation column 8. A common port C of the third six-way valve 7 is connected to a liquid outlet of the first separation column 8, a port 1# of the third six-way valve 7 is connected to a liquid inlet pipe 14 of the evaporation-recovery device, and a port 2# of the third six-way valve 7 is connected to a liquid inlet of the second separation column 17. Central bores of the first six-way valve 5, the second six-way valve 6, and the third six-way valve 7 serve as common passages. The switching among a plurality of flow paths can be achieved through a rotor to enable that different solutions alternatingly flow through. A flow path has a diameter of 1.2 mm. A capacity from one port to another port is 27.5 µL. A capacity of a rotor slot is 5.41 µL. A liquid-contact material for these valves is PCTEF or sapphire. A piping interface is a 1/4-28UNF threaded interface. A switching time is less than 4 seconds (s) per revolution. A maximum driving force is 4 N/m. The first injection pump and the second injection pump are designed to have a liquid volume accuracy error of less than 1% and a liquid volume repeatability error of 0.3% to 0.5%. According to actual service conditions, sample injectors with different specifications of 50 µL to 10 mL can be selected, a piping interface is a 1/4-28UNF threaded interface, and a rated stroke running time is 2 s to 12,000 s (with pure water as a medium). Components that need to be controlled by the control unit include the first six-way valve 5, the second six-way valve 6, the third six-way valve 7, the first injection pump 9, and the second injection pump 10. Hardware involved includes a 485 hub and a miniature touchscreen. The first six-way valve 5, the second six-way valve 6, the third six-way valve 7, the first injection pump 9, and the second injection pump 10 communicate with each other through the 485 hub and the miniature touchscreen. An upper computer software sends a control command to the 485 hub through a serial port of a computer, and then the control command is sent by the 485 hub to each device, thereby achieving the control of each device. A sealing material for an upper cover of the first separation column 8 is a thermoplastic polyurethane elastomer rubber, and a middle thread of the sealing material is made of a polyetheretherketone material.

The evaporation-recovery device includes (is composed of) a liquid inlet pipe 14, an evaporation dish 11, a baffle plate 12, a liquid outlet 15, and a heating device 16. The baffle plate 12 is located inside the evaporation dish 11 and is configured to prevent splashing of a strontium [⁹⁰Sr] solution during evaporation, and the baffle plate 12 is provided with small hole(s) 13 to discharge a gas resulted from evaporation. The liquid inlet pipe 14 penetrates through the baffle plate 12. One end of the liquid inlet pipe 14 is connected to the communication device and the rinsing tank 2, and the other end of the liquid inlet pipe 14 is suspended above a bottom of the evaporation dish 11. The liquid outlet 15 is configured at a side of an outer surface of the evaporation dish 11 and is connected to the mother liquor tank 1. The heating device 16 is located at the bottom of the evaporation dish 11 and is configured to heat a strontium [⁹⁰Sr] solution in the evaporation dish 11.

The control unit is in a signal connection with the first six-way valve 5, the second six-way valve 6, the third six-way valve 7, the first injection pump 9, and the second injection pump 10.

The liquid inlet of the second separation column 17 is connected with the first elution tank 3 and the port 2# of the third six-way valve 6, and a liquid outlet of the second separation column 17 is connected to a liquid inlet of the third separation column 18. A resin in the second separation column 17 is a CL-P204 extraction chromatographic resin.

The liquid inlet of the third separation column 18 is connected with the first elution tank 3 and the liquid outlet of the second separation column 17, and a liquid outlet of the third separation column 18 is connected to the second elution tank 4. A resin in the third separation column 18 is a CL-P204 extraction chromatographic resin.

### Example 4

In this example, a method for separating yttrium [⁹⁰Y] from a strontium [⁹⁰Sr]-containing mother liquor was provided. This method was implemented with the generator in Example 1. A volume of a resin separation column was 1 mL. The 2nd mL to 3rd mL of an eluate was taken as a product solution.

Specifically, the method was composed of the following steps:
S1: 2 mL of a hydrochloric acid solution with a concentration of 1 mol/L was drawn by the first injection pump from the rinsing tank through the port 4# of the first six-way valve, and fed into a separation resin (a CL-P204 extraction chromatographic resin with a pore size of 40 mesh to 150 mesh, purchased from Zhengzhou Ainuo Chemical Technology Co., Ltd., China) of the first separation column through the common port C of the first six-way valve to equilibrate the separation resin for an equilibration time of 5 min.
S2: 2 mL of an yttrium [⁹⁰Y]-containing strontium [⁹⁰Sr] mother liquor was drawn at a flow rate of 0.5 mL/min from the mother liquor tank through the port 2# of the second six-way valve. The second six-way valve was switched to the port 1# and the first six-way valve was switched to the port 1#, such that the yttrium [⁹⁰Y]-containing strontium [⁹⁰Sr] mother liquor entered the port 1# of the first six-way valve through the port 1# of the second six-way valve, and flowed at a flow rate of 1 mL/min into the separation resin of the first separation column through the common port C of the first six-way valve. As a result, a large amount of yttrium [⁹⁰Y] and a very small amount of strontium [⁹⁰Sr] attached to the separation resin. The third six-way valve was switched to the port 1#, such that a solution containing a large amount of strontium [⁹⁰Sr] and a very small amount of yttrium [⁹⁰Y] flowed into the third six-way valve through the common port C of the third six-way valve, and then flowed into the liquid inlet pipe of the evaporation-recovery device through the port 1# of the third six-way valve.
S3: 11 mL of a hydrochloric acid solution with a concentration of 1 mol/L was drawn by the first injection pump from the rinsing tank through the port 4# of the first six-way valve. The first six-way valve was switched to the port 6# and the second six-way valve was switched to the port 4#, such that a rinsing solution (i.e., the hydrochloric acid solution) flowed into the port 4# of the second six-way valve through the port 6# of the first six-way valve, and then flowed at a flow rate of 1 mL/min into the separation resin of the first separation column through the common port C of the second six-way valve to rinse off the very small amount of strontium [⁹⁰Sr] attached to the separation resin. The third six-way valve was switched to the port 1#, such that a solution containing the very small amount of strontium [⁹⁰Sr] flowed into the liquid inlet pipe of the evaporation-recovery device through the common port C and the port 1# of the third six-way valve.
S4: Strontium [⁹⁰Sr]-containing solutions collected in S2 and S3 were fed slowly at a flow rate of 1 mL/min into the evaporation dish through the liquid inlet pipe of the evaporation-recovery device, and subjected to evaporation at 90°C. A gas resulted from the evaporation was discharged through the small hole(s) of the baffle plate. After all the solutions were completely evaporated, the 1 mol/L hydrochloric acid solution was drawn from the rinsing tank and added thereto to completely dissolve a solid remained, and a resulting system was left to stand for 10 days (d) to produce a strontium [⁹⁰Sr]-yttrium [⁹⁰Y] rinsing solution. The strontium [⁹⁰Sr]-yttrium [⁹⁰Y] rinsing solution was added to the mother liquor tank for recycling.
S5: The first six-way valve was switched to the port 5#, such that a liquid in the first separation column was drained with air. 3 mL of a hydrochloric acid solution with a concentration of 8 mol/L was drawn by the second injection pump from the second elution tank through the port 2# of the first six-way valve. The first six-way valve was switched to the port 3# and the second six-way valve was switched to the port 3#, such that an eluent flowed into the port 3# of the second six-way valve through the port 3# of the first six-way valve, and then flowed at a flow rate of 1 mL/min into the separation resin of the first separation column through the common port C of the second six-way valve to elute the large amount of yttrium [⁹⁰Y] attached to the separation resin. The third six-way valve was switched to the port 2#, such that a solution containing a large amount of yttrium [⁹⁰Y] flowed into the second elution tank through the common port C and port 2# of the third six-way valve. An yttrium [⁹⁰Y] solution in the second elution tank was the yttrium [⁹⁰Y]-containing eluate collected.

### Example 5

In this example, a method for separating yttrium [⁹⁰Y] from a strontium [⁹⁰Sr]-containing mother liquor was provided. This method was implemented with the generator in Example 2. A volume of a resin separation column was 1 mL. The 2nd mL to 3rd mL of an eluate was taken as a product solution.

Specifically, the method was composed of the following steps:
S1: 2 mL of a hydrochloric acid solution with a concentration of 1 mol/L was drawn by the first injection pump from the rinsing tank through the port 4# of the first six-way valve, and fed into a separation resin (a CL-P204 extraction chromatographic resin with a pore size of 40 mesh to 150 mesh) of the first separation column through the common port C of the first six-way valve to equilibrate the separation resin for an equilibration time of 5 min.
S2: 2 mL of an yttrium [⁹⁰Y]-containing strontium [⁹⁰Sr] mother liquor was drawn at a flow rate of 0.5 mL/min from the mother liquor tank through the port 2# of the second six-way valve. The second six-way valve was switched to the port 1# and the first six-way valve was switched to the port 1#, such that the yttrium [⁹⁰Y]-containing strontium [⁹⁰Sr] mother liquor entered the port 1# of the first six-way valve through the port 1# of the second six-way valve, and flowed at a flow rate of 1 mL/min into the separation resin of the first separation column through the common port C of the first six-way valve. As a result, a large amount of yttrium [⁹⁰Y] and a very small amount of strontium [⁹⁰Sr] attached to the separation resin. The third six-way valve was switched to the port 1#, such that a solution containing a large amount of strontium [⁹⁰Sr] and a very small amount of yttrium [⁹⁰Y] flowed into the third six-way valve through the common port C of the third six-way valve, and then flowed into the liquid inlet pipe of the evaporation-recovery device through the port 1# of the third six-way valve.
S3: 11 mL of a hydrochloric acid solution with a concentration of 1 mol/L was drawn by the first injection pump from the rinsing tank through the port 4# of the first six-way valve. The first six-way valve was switched to the port 6# and the second six-way valve was switched to the port 4#, such that a rinsing solution (i.e., the hydrochloric acid solution) flowed into the port 4# of the second six-way valve through the port 6# of the first six-way valve, and then flowed at a flow rate of 1 mL/min into the separation resin of the first separation column through the common port C of the second six-way valve to rinse off a trace amount of strontium [⁹⁰Sr] attached to the separation resin. The third six-way valve was switched to the port 1#, such that a solution containing a trace amount of strontium [⁹⁰Sr] flowed into the liquid inlet pipe of the evaporation-recovery device through the common port C and the port 1# of the third six-way valve.
S4: Strontium [⁹⁰Sr]-containing rinsing solutions collected in S2 and S3 were fed slowly at a flow rate of 1 mL/min into the evaporation dish through the liquid inlet pipe of the evaporation-recovery device, and subjected to evaporation at 90°C. A gas resulted from the evaporation was discharged through the small hole(s) of the baffle plate. After all the solutions were completely evaporated, the 1 mol/L hydrochloric acid solution was drawn from the rinsing tank and added thereto to completely dissolve a solid remained, and a resulting system was left to stand for 10 d to produce a strontium [⁹⁰Sr]-yttrium [⁹⁰Y] rinsing solution. The strontium [⁹⁰Sr]-yttrium [⁹⁰Y] rinsing solution was added to the mother liquor tank for recycling.
S5: The first six-way valve was switched to the port 5#, such that a liquid in the first separation column was drained with air. 3 mL of a hydrochloric acid solution with a concentration of 8 mol/L was drawn by the second injection pump from the second elution tank through the port 2# of the first six-way valve. The first six-way valve was switched to the port 3# and the second six-way valve was switched to the port 3#, such that an eluent flowed into the port 3# of the second six-way valve through the port 3# of the first six-way valve, and then flowed at a flow rate of 1 mL/min into the separation resin of the first separation column through the common port C of the second six-way valve to elute the large amount of yttrium [⁹⁰Y] attached to the separation resin. The third six-way valve was switched to the port 2#, such that a solution containing a large amount of yttrium [⁹⁰Y] flowed into the second separation column through the common port C and port 2# of the third six-way valve.
S6: A product solution eluted from the first separation column flowed through a separation resin (a CL-P204 extraction chromatographic resin with a pore size of 40 mesh to 150 mesh) in the second separation column at a flow rate of 1 mL/min. A hydrochloric acid solution with a concentration of 8 mol/L was drawn from the first elution tank, and flowed through the separation resin in the second separation column. A purified yttrium [⁹⁰Y]-containing eluate was collected through the second elution tank. An yttrium [⁹⁰Y]-containing solution in the second elution tank was the yttrium [⁹⁰Y]-containing eluate collected.

### Example 6

In this example, a method for separating yttrium [⁹⁰Y] from a strontium [⁹⁰Sr]-containing mother liquor was provided. This method was implemented with the generator in Example 3. A volume of a resin separation column was 1 mL. The 2nd mL to 3rd mL of an eluate was taken as a product solution.

Specifically, the method was composed of the following steps:
S1: 2 mL of a hydrochloric acid solution with a concentration of 1 mol/L was drawn by the first injection pump from the rinsing tank through the port 4# of the first six-way valve, and fed into a separation resin (a CL-P204 extraction chromatographic resin) of the first separation column through the common port C of the first six-way valve to equilibrate the separation resin for an equilibration time of 5 min.
S2: 2 mL of an yttrium [⁹⁰Y]-containing strontium [⁹⁰Sr] mother liquor was drawn at a flow rate of 0.5 mL/min from the mother liquor tank through the port 2# of the second six-way valve. The second six-way valve was switched to the port 1# and the first six-way valve was switched to the port 1#, such that the yttrium [⁹⁰Y]-containing strontium [⁹⁰Sr] mother liquor entered the port 1# of the first six-way valve through the port 1# of the second six-way valve, and flowed at a flow rate of 1 mL/min into the separation resin of the first separation column through the common port C of the first six-way valve. As a result, a large amount of yttrium [⁹⁰Y] and a very small amount of strontium [⁹⁰Sr] attached to the separation resin. The third six-way valve was switched to the port 1#, such that a solution containing a large amount of strontium [⁹⁰Sr] and a very small amount of yttrium [⁹⁰Y] flowed into the third six-way valve through the common port C of the third six-way valve, and then flowed into the liquid inlet pipe of the evaporation-recovery device through the port 1# of the third six-way valve.
S3: 11 mL of a hydrochloric acid solution with a concentration of 1 mol/L was drawn by the first injection pump from the rinsing tank through the port 4# of the first six-way valve. The first six-way valve was switched to the port 6# and the second six-way valve was switched to the port 4#, such that a rinsing solution (i.e., the hydrochloric acid solution) flowed into the port 4# of the second six-way valve through the port 6# of the first six-way valve, and then flowed at a flow rate of 1 mL/min into the separation resin of the first separation column through the common port C of the second six-way valve to rinse off a trace amount of strontium [⁹⁰Sr] attached to the separation resin. The third six-way valve was switched to the port 1#, such that a solution containing a trace amount of strontium [⁹⁰Sr] flowed into the liquid inlet pipe of the evaporation-recovery device through the common port C and the port 1# of the third six-way valve.
S4: Strontium [⁹⁰Sr]-containing rinsing solutions collected in S2 and S3 flowed slowly at a flow rate of 1 mL/min into the evaporation dish through the liquid inlet pipe of the evaporation-recovery device, and subjected to evaporation at 90°C. A gas resulted from the evaporation was discharged through the small hole(s) of the baffle plate. After all the solutions were completely evaporated, the 1 mol/L hydrochloric acid solution was drawn from the rinsing tank and added thereto to completely dissolve a solid remained, and a resulting system was left to stand for 10 d to produce a strontium [⁹⁰Sr]-yttrium [⁹⁰Y] rinsing solution. The strontium [⁹⁰Sr]-yttrium [⁹⁰Y] rinsing solution was added to the mother liquor tank for recycling.
S5: The first six-way valve was switched to the port 5#, such that a liquid in the first separation column was drained with air. 3 mL of a hydrochloric acid solution with a concentration of 8 mol/L was drawn by the second injection pump from the second elution tank through the port 2# of the first six-way valve. The first six-way valve was switched to the port 3# and the second six-way valve was switched to the port 3#, such that an eluent flowed into the port 3# of the second six-way valve through the port 3# of the first six-way valve, and then flowed at a flow rate of 1 mL/min into the separation resin of the first separation column through the common port C of the second six-way valve to elute the large amount of yttrium [⁹⁰Y] attached to the separation resin. The third six-way valve was switched to the port 2#, such that a solution containing a large amount of yttrium [⁹⁰Y] flowed into the second separation column through the common port C and port 2# of the third six-way valve.
S6: A product solution eluted from the first separation column flowed through a separation resin (a CL-P204 extraction chromatographic resin with a pore size of 40 mesh to 150 mesh) in the second separation column at a flow rate of 1 mL/min. A hydrochloric acid solution with a concentration of 8 mol/L was drawn from the first elution tank, and flowed through the separation resin in the second separation column. A resulting eluate entered the third separation column.
S7: A product solution eluted from the second separation column flowed through a separation resin (a CL-P204 extraction chromatographic resin with a pore size of 40 mesh to 150 mesh) in the third separation column at a flow rate of 1 mL/min. A hydrochloric acid solution with a concentration of 8 mol/L was drawn from the first elution tank, and flowed through the separation resin in the third separation column. A purified yttrium [⁹⁰Y]-containing eluate was collected through the second elution tank. An yttrium [⁹⁰Y]-containing solution in the second elution tank was the yttrium [⁹⁰Y]-containing eluate collected.

### Example 7

In this example, a method for separating yttrium [⁹⁰Y] from a strontium [⁹⁰Sr]-containing mother liquor was provided. This method was implemented with the generator in Example 1. A volume of a resin separation column was 1 mL. The 2nd mL to 3rd mL of an eluate was taken as a product solution.

Specifically, the method was composed of the following steps:
S1: 2 mL of a nitric acid solution with a concentration of 1.5 mol/L was drawn by the first injection pump from the rinsing tank through the port 4# of the first six-way valve, and fed into a separation resin (a CL-P204 extraction chromatographic resin with a pore size of 40 mesh to 150 mesh, purchased from Zhengzhou Ainuo Chemical Technology Co., Ltd., China) of the first separation column through the common port C of the first six-way valve to equilibrate the separation resin for an equilibration time of 5 min.
S2: 2 mL of an yttrium [⁹⁰Y]-containing strontium [⁹⁰Sr] mother liquor was drawn at a flow rate of 0.5 mL/min from the mother liquor tank through the port 2# of the second six-way valve. The second six-way valve was switched to the port 1# and the first six-way valve was switched to the port 1#, such that the yttrium [⁹⁰Y]-containing strontium [⁹⁰Sr] mother liquor entered the port 1# of the first six-way valve through the port 1# of the second six-way valve, and flowed at a flow rate of 1 mL/min into the separation resin of the first separation column through the common port C of the first six-way valve. As a result, a large amount of yttrium [⁹⁰Y] and a very small amount of strontium [⁹⁰Sr] attached to the separation resin. The third six-way valve was switched to the port 1#, such that a solution containing a large amount of strontium [⁹⁰Sr] and a very small amount of yttrium [⁹⁰Y] flowed into the third six-way valve through the common port C of the third six-way valve, and then flowed into the liquid inlet pipe of the evaporation-recovery device through the port 1# of the third six-way valve.
S3: 11 mL of a nitric acid solution with a concentration of 1.5 mol/L was drawn by the first injection pump from the rinsing tank through the port 4# of the first six-way valve. The first six-way valve was switched to the port 6# and the second six-way valve was switched to the port 4#, such that a rinsing solution (i.e., the nitric acid solution) flowed into the port 4# of the second six-way valve through the port 6# of the first six-way valve, and then flowed at a flow rate of 1 mL/min into the separation resin of the first separation column through the common port C of the second six-way valve to rinse off a trace amount of strontium [⁹⁰Sr] attached to the separation resin. The third six-way valve was switched to the port 1#, such that a solution containing a trace amount of strontium [⁹⁰Sr] flowed into the liquid inlet pipe of the evaporation-recovery device through the common port C and the port 1# of the third six-way valve.
S4: Strontium [⁹⁰Sr]-containing solutions collected in S2 and S3 flowed slowly at a flow rate of 1 mL/min into the evaporation dish through the liquid inlet pipe of the evaporation-recovery device, and subjected to evaporation at 90°C. A gas resulted from the evaporation was discharged through the small hole(s) of the baffle plate. After all the solutions were completely evaporated, the 1.5 mol/L nitric acid solution was drawn from the rinsing tank and added thereto to completely dissolve a solid remained, and a resulting system was left to stand for 10 d to produce a strontium [⁹⁰Sr]-yttrium [⁹⁰Y] rinsing solution. The strontium [⁹⁰Sr]-yttrium [⁹⁰Y] rinsing solution was added to the mother liquor tank for recycling.
S5: The first six-way valve was switched to the port 5#, such that a liquid in the first separation column was drained with air. 3 mL of a nitric acid solution with a concentration of 6 mol/L was drawn by the second injection pump from the second elution tank through the port 2# of the first six-way valve. The first six-way valve was switched to the port 3# and the second six-way valve was switched to the port 3#, such that an eluent flowed into the port 3# of the second six-way valve through the port 3# of the first six-way valve, and then flowed at a flow rate of 1 mL/min into the separation resin of the first separation column through the common port C of the second six-way valve to elute the large amount of yttrium [⁹⁰Y] attached to the separation resin. The third six-way valve was switched to the port 2#, such that a solution containing a large amount of yttrium [⁹⁰Y] flowed into the second elution tank through the common port C and port 2# of the third six-way valve. An yttrium [⁹⁰Y] solution in the second elution tank was the yttrium [⁹⁰Y]-containing eluate collected.

### Comparative Example 1

In this comparative example, a method for separating yttrium [⁹⁰Y] from a strontium [⁹⁰Sr]-containing mother liquor was provided. This method was implemented with the generator in Example 1. A volume of a resin separation column was 1 mL. The 2nd mL to 3rd mL of an eluate was taken as a product solution.

Specifically, the method was composed of the following steps:
S1: 2 mL of a hydrochloric acid solution with a concentration of 1 mol/L was drawn by the first injection pump from the rinsing tank through the port 4# of the first six-way valve, and fed into a separation resin (a cation exchange resin with a pore size of 0.5 mm to 1.0 mm, purchased from LANGFANG SENATE CHEMICAL Co., Ltd., China, model: SNT-D001) of the first separation column through the common port C of the first six-way valve to equilibrate the separation resin for an equilibration time of 5 min.
S2: 2 mL of an yttrium [⁹⁰Y]-containing strontium [⁹⁰Sr] mother liquor was drawn at a flow rate of 0.5 mL/min from the mother liquor tank through the port 2# of the second six-way valve. The second six-way valve was switched to the port 1# and the first six-way valve was switched to the port 1#, such that the yttrium [⁹⁰Y]-containing strontium [⁹⁰Sr] mother liquor entered the port 1# of the first six-way valve through the port 1# of the second six-way valve, and flowed at a flow rate of 1 mL/min into the separation resin of the first separation column through the common port C of the first six-way valve. As a result, a large amount of yttrium [⁹⁰Y] and a very small amount of strontium [⁹⁰Sr] attached to the separation resin. The third six-way valve was switched to the port 1#, such that a solution containing a large amount of strontium [⁹⁰Sr] and a very small amount of yttrium [⁹⁰Y] flowed into the third six-way valve through the common port C of the third six-way valve, and then flowed into the liquid inlet pipe of the evaporation-recovery device through the port 1# of the third six-way valve.
S3: 11 mL of a hydrochloric acid solution with a concentration of 1 mol/L was drawn by the first injection pump from the rinsing tank through the port 4# of the first six-way valve. The first six-way valve was switched to the port 6# and the second six-way valve was switched to the port 4#, such that a rinsing solution (i.e., the hydrochloric acid solution) flowed into the port 4# of the second six-way valve through the port 6# of the first six-way valve, and then flowed at a flow rate of 1 mL/min into the separation resin of the first separation column through the common port C of the second six-way valve to rinse off a trace amount of strontium [⁹⁰Sr] attached to the separation resin. The third six-way valve was switched to the port 1#, such that a solution containing a trace amount of strontium [⁹⁰Sr] flowed into the liquid inlet pipe of the evaporation-recovery device through the common port C and the port 1# of the third six-way valve.
S4: Strontium [⁹⁰Sr]-containing rinsing solutions collected in S2 and S3 flowed slowly at a flow rate of 1 mL/min into the evaporation dish through the liquid inlet pipe of the evaporation-recovery device, and subjected to evaporation at 90°C. A gas resulted from the evaporation was discharged through the small hole(s) of the baffle plate. After all the solutions were completely evaporated, the 1 mol/L hydrochloric acid solution was drawn from the rinsing tank and added thereto to completely dissolve a solid remained, and a resulting system was left to stand for 10 d to produce a strontium [⁹⁰Sr]-yttrium [⁹⁰Y] rinsing solution. The strontium [⁹⁰Sr]-yttrium [⁹⁰Y] rinsing solution was added to the mother liquor tank for recycling.
S5: The first six-way valve was switched to the port 5#, such that a liquid in the first separation column was drained with air. 3 mL of a hydrochloric acid solution with a concentration of 8 mol/L was drawn by the second injection pump from the second elution tank through the port 2# of the first six-way valve. The first six-way valve was switched to the port 3# and the second six-way valve was switched to the port 3#, such that an eluent flowed into the port 3# of the second six-way valve through the port 3# of the first six-way valve, and then flowed at a flow rate of 1 mL/min into the separation resin of the first separation column through the common port C of the second six-way valve to elute the large amount of yttrium [⁹⁰Y] attached to the separation resin. The third six-way valve was switched to the port 2#, such that a solution containing a large amount of yttrium [⁹⁰Y] flowed into the second elution tank through the common port C and port 2# of the third six-way valve. An yttrium [⁹⁰Y]-containing solution in the second elution tank was the yttrium [⁹⁰Y]-containing eluate collected.

### Comparative Example 2

In this comparative example, a method for separating yttrium [⁹⁰Y] from a strontium [⁹⁰Sr]-containing mother liquor was provided. This method was implemented with the generator in Example 1. A volume of a resin separation column was 1 mL. The 2nd mL to 3rd mL of an eluate was taken as a product solution.

Specifically, the method was composed of the following steps:
S1: 2 mL of a hydrochloric acid solution with a concentration of 1 mol/L was drawn by the first injection pump from the rinsing tank through the port 4# of the first six-way valve, and fed into a separation resin (SR resin with a pore size of 40 mesh to 150 mesh, purchased from Zhejiang Zhengguang Industrial Co., Ltd., China, model: SR-1) of the first separation column through the common port C of the first six-way valve to equilibrate the separation resin for an equilibration time of 5 min.
S2: 2 mL of an yttrium [⁹⁰Y]-containing strontium [⁹⁰Sr] mother liquor was drawn at a flow rate of 0.5 mL/min from the mother liquor tank through the port 2# of the second six-way valve. The second six-way valve was switched to the port 1# and the first six-way valve was switched to the port 1#, such that the yttrium [⁹⁰Y]-containing strontium [⁹⁰Sr] mother liquor entered the port 1# of the first six-way valve through the port 1# of the second six-way valve, and flowed at a flow rate of 1 mL/min into the separation resin of the first separation column through the common port C of the first six-way valve. As a result, a large amount of yttrium [⁹⁰Y] and a very small amount of strontium [⁹⁰Sr] attached to the separation resin. The third six-way valve was switched to the port 1#, such that a solution containing a large amount of strontium [⁹⁰Sr] and a very small amount of yttrium [⁹⁰Y] flowed into the third six-way valve through the common port C of the third six-way valve, and then flowed into the liquid inlet pipe of the evaporation-recovery device through the port 1# of the third six-way valve.
S3: 11 mL of a hydrochloric acid solution with a concentration of 1 mol/L was drawn by the first injection pump from the rinsing tank through the port 4# of the first six-way valve. The first six-way valve was switched to the port 6# and the second six-way valve was switched to the port 4#, such that a rinsing solution (i.e., the hydrochloric acid solution) flowed into the port 4# of the second six-way valve through the port 6# of the first six-way valve, and then flowed at a flow rate of 1 mL/min into the separation resin of the first separation column through the common port C of the second six-way valve to rinse off a trace amount of strontium [⁹⁰Sr] attached to the separation resin. The third six-way valve was switched to the port 1#, such that a solution containing a trace amount of strontium [⁹⁰Sr] flowed into the liquid inlet pipe of the evaporation-recovery device through the common port C and the port 1# of the third six-way valve.
S4: Strontium [⁹⁰Sr]-containing solutions collected in S2 and S3 flowed slowly at a flow rate of 1 mL/min into the evaporation dish through the liquid inlet pipe of the evaporation-recovery device, and subjected to evaporation at 90°C. A gas resulted from the evaporation was discharged through the small hole(s) of the baffle plate. After all the solutions were completely evaporated, the 1 mol/L hydrochloric acid solution was drawn from the rinsing tank and added thereto to completely dissolve a solid remained, and a resulting system was left to stand for 10 d to produce a strontium [⁹⁰Sr]-yttrium [⁹⁰Y] rinsing solution. The strontium [⁹⁰Sr]-yttrium [⁹⁰Y] rinsing solution was added to the mother liquor tank for recycling.
S5: The first six-way valve was switched to the port 5#, such that a liquid in the first separation column was drained with air. 3 mL of a hydrochloric acid solution with a concentration of 8 mol/L was drawn by the second injection pump from the second elution tank through the port 2# of the first six-way valve. The first six-way valve was switched to the port 3# and the second six-way valve was switched to the port 3#, such that an eluent flowed into the port 3# of the second six-way valve through the port 3# of the first six-way valve, and then flowed at a flow rate of 1 mL/min into the separation resin of the first separation column through the common port C of the second six-way valve to elute the large amount of yttrium [⁹⁰Y] attached to the separation resin. The third six-way valve was switched to the port 2#, such that a solution containing a large amount of yttrium [⁹⁰Y] flowed into the second elution tank through the common port C and port 2# of the third six-way valve. An yttrium [⁹⁰Y] solution in the second elution tank was the yttrium [⁹⁰Y]-containing eluate collected.

### Comparative Example 3

In this comparative example, a method for separating yttrium [⁹⁰Y] from a strontium [⁹⁰Sr]-containing mother liquor was provided. This method was implemented with the generator in Example 1. A volume of a resin separation column was 1 mL. The 2nd mL to 3rd mL of an eluate was taken as a product solution.

Specifically, the method was composed of the following steps:
S1: 2 mL of a hydrochloric acid solution with a concentration of 1 mol/L was drawn by the first injection pump from the rinsing tank through the port 4# of the first six-way valve, and fed into a separation resin (HDEHP extraction chromatographic resin with a pore size of 40 mesh to 120 mesh, purchased from Beijing Zhengguang Chuangye Technology Co., Ltd., China, model: ZGCLP204) of the first separation column through the common port C of the first six-way valve to equilibrate the separation resin for an equilibration time of 5 min.
S2: 2 mL of an yttrium [⁹⁰Y]-containing strontium [⁹⁰Sr] mother liquor was drawn at a flow rate of 0.5 mL/min from the mother liquor tank through the port 2# of the second six-way valve. The second six-way valve was switched to the port 1# and the first six-way valve was switched to the port 1#, such that the yttrium [⁹⁰Y]-containing strontium [⁹⁰Sr] mother liquor entered the port 1# of the first six-way valve through the port 1# of the second six-way valve, and flowed at a flow rate of 1 mL/min into the separation resin of the first separation column through the common port C of the first six-way valve. As a result, a large amount of yttrium [⁹⁰Y] and a very small amount of strontium [⁹⁰Sr] attached to the separation resin. The third six-way valve was switched to the port 1#, such that a solution containing a large amount of strontium [⁹⁰Sr] and a very small amount of yttrium [⁹⁰Y] flowed into the third six-way valve through the common port C of the third six-way valve, and then flowed into the liquid inlet pipe of the evaporation-recovery device through the port 1# of the third six-way valve.
S3: 11 mL of a hydrochloric acid solution with a concentration of 1 mol/L was drawn by the first injection pump from the rinsing tank through the port 4# of the first six-way valve. The first six-way valve was switched to the port 6# and the second six-way valve was switched to the port 4#, such that a rinsing solution (i.e., the hydrochloric acid solution) flowed into the port 4# of the second six-way valve through the port 6# of the first six-way valve, and then flowed at a flow rate of 1 mL/min into the separation resin of the first separation column through the common port C of the second six-way valve to rinse off a trace amount of strontium [⁹⁰Sr] attached to the separation resin. The third six-way valve was switched to the port 1#, such that a solution containing a trace amount of strontium [⁹⁰Sr] flowed into the liquid inlet pipe of the evaporation-recovery device through the common port C and the port 1# of the third six-way valve.
S4: Strontium [⁹⁰Sr]-containing solutions collected in S2 and S3 flowed slowly at a flow rate of 1 mL/min into the evaporation dish through the liquid inlet pipe of the evaporation-recovery device, and subjected to evaporation at 90°C. A gas resulted from the evaporation was discharged through the small hole(s) of the baffle plate. After all the solutions were completely evaporated, the 1 mol/L hydrochloric acid solution was drawn from the rinsing tank and added thereto to completely dissolve a solid remained, and a resulting system was left to stand for 10 d to produce a strontium [⁹⁰Sr]-yttrium [⁹⁰Y] rinsing solution. The strontium [⁹⁰Sr]-yttrium [⁹⁰Y] rinsing solution was added to the mother liquor tank for recycling.
S5: The first six-way valve was switched to the port 5#, such that a liquid in the first separation column was drained with air. 3 mL of a hydrochloric acid solution with a concentration of 8 mol/L was drawn by the second injection pump from the second elution tank through the port 2# of the first six-way valve. The first six-way valve was switched to the port 3# and the second six-way valve was switched to the port 3#, such that an eluent flowed into the port 3# of the second six-way valve through the port 3# of the first six-way valve, and then flowed at a flow rate of 1 mL/min into the separation resin of the first separation column through the common port C of the second six-way valve to elute the large amount of yttrium [⁹⁰Y] attached to the separation resin. The third six-way valve was switched to the port 2#, such that a solution containing a large amount of yttrium [⁹⁰Y] flowed into the second elution tank through the common port C and port 2# of the third six-way valve. An yttrium [⁹⁰Y] solution in the second elution tank was the yttrium [⁹⁰Y]-containing eluate collected.

### Comparative Example 4

In this comparative example, a method for separating yttrium [⁹⁰Y] from a strontium [⁹⁰Sr]-containing mother liquor was provided. This method was implemented with the generator in Example 1. A volume of a resin separation column was 1 mL. The 2nd mL to 3rd mL of an eluate was taken as a product solution.

Specifically, the method was composed of the following steps:
S1: 2 mL of a hydrochloric acid solution with a concentration of 1 mol/L was drawn by the first injection pump from the rinsing tank through the port 4# of the first six-way valve, and fed into a separation resin (a strontium-specific crown ether resin with a pore size of 40 mesh to 120 mesh, which was purchased from Triskem International, France and was prepared by attaching 4,4'-(5')-di(tetra-butylcyclohexyl)-18-crown-6 to an inert monomer) of the first separation column through the common port C of the first six-way valve to equilibrate the separation resin for an equilibration time of 5 min.
S2: 2 mL of an yttrium [⁹⁰Y]-containing strontium [⁹⁰Sr] mother liquor was drawn at a flow rate of 0.5 mL/min from the mother liquor tank through the port 2# of the second six-way valve. The second six-way valve was switched to the port 1# and the first six-way valve was switched to the port 1#, such that the yttrium [⁹⁰Y]-containing strontium [⁹⁰Sr] mother liquor entered the port 1# of the first six-way valve through the port 1# of the second six-way valve, and flowed at a flow rate of 1 mL/min into the separation resin of the first separation column through the common port C of the first six-way valve. As a result, a large amount of yttrium [⁹⁰Y] and a very small amount of strontium [⁹⁰Sr] attached to the separation resin. The third six-way valve was switched to the port 1#, such that a solution containing a large amount of strontium [⁹⁰Sr] and a very small amount of yttrium [⁹⁰Y] flowed into the third six-way valve through the common port C of the third six-way valve, and then flowed into the liquid inlet pipe of the evaporation-recovery device through the port 1# of the third six-way valve.
S3: 11 mL of a hydrochloric acid solution with a concentration of 1 mol/L was drawn by the first injection pump from the rinsing tank through the port 4# of the first six-way valve. The first six-way valve was switched to the port 6# and the second six-way valve was switched to the port 4#, such that a rinsing solution (i.e., the hydrochloric acid solution) flowed into the port 4# of the second six-way valve through the port 6# of the first six-way valve, and then flowed at a flow rate of 1 mL/min into the separation resin of the first separation column through the common port C of the second six-way valve to rinse off a trace amount of strontium [⁹⁰Sr] attached to the separation resin. The third six-way valve was switched to the port 1#, such that a solution containing a trace amount of strontium [⁹⁰Sr] flowed into the liquid inlet pipe of the evaporation-recovery device through the common port C and the port 1# of the third six-way valve.
S4: Strontium [⁹⁰Sr]-containing solutions collected in S2 and S3 flowed slowly at a flow rate of 1 mL/min into the evaporation dish through the liquid inlet pipe of the evaporation-recovery device, and subjected to evaporation at 90°C. A gas resulted from the evaporation was discharged through the small hole(s) of the baffle plate. After all the solutions were completely evaporated, the 1 mol/L hydrochloric acid solution was drawn from the rinsing tank and added thereto to completely dissolve a solid remained, and a resulting system was left to stand for 10 d to produce a strontium [⁹⁰Sr]-yttrium [⁹⁰Y] rinsing solution. The strontium [⁹⁰Sr]-yttrium [⁹⁰Y] rinsing solution was added to the mother liquor tank for recycling.
S5: The first six-way valve was switched to the port 5#, such that a liquid in the first separation column was drained with air. 3 mL of a hydrochloric acid solution with a concentration of 8 mol/L was drawn by the second injection pump from the second elution tank through the port 2# of the first six-way valve. The first six-way valve was switched to the port 3# and the second six-way valve was switched to the port 3#, such that an eluent flowed into the port 3# of the second six-way valve through the port 3# of the first six-way valve, and then flowed at a flow rate of 1 mL/min into the separation resin of the first separation column through the common port C of the second six-way valve to elute the large amount of yttrium [⁹⁰Y] attached to the separation resin. The third six-way valve was switched to the port 2#, such that a solution containing a large amount of yttrium [⁹⁰Y] flowed into the second elution tank through the common port C and port 2# of the third six-way valve. An yttrium [⁹⁰Y] solution in the second elution tank was the yttrium [⁹⁰Y]-containing eluate collected.

### Comparative Example 5

In this comparative example, a method for separating yttrium [⁹⁰Y] from a strontium [⁹⁰Sr]-containing mother liquor was provided. This method was implemented with the generator in Example 1. A volume of a resin separation column was 1 mL. The 2nd mL to 3rd mL of an eluate was taken as a product solution.

Specifically, the method was composed of the following steps:
S1: 2 mL of a hydrochloric acid solution with a concentration of 1 mol/L was drawn by the first injection pump from the rinsing tank through the port 4# of the first six-way valve, and fed into a separation resin (a CL-P204 extraction chromatographic resin with a pore size of 40 mesh to 150 mesh) of the first separation column through the common port C of the first six-way valve to equilibrate the separation resin for an equilibration time of 5 min.
S2: 2 mL of an yttrium [⁹⁰Y]-containing strontium [⁹⁰Sr] mother liquor was drawn at a flow rate of 0.5 mL/min from the mother liquor tank through the port 2# of the second six-way valve. The second six-way valve was switched to the port 1# and the first six-way valve was switched to the port 1#, such that the yttrium [⁹⁰Y]-containing strontium [⁹⁰Sr] mother liquor entered the port 1# of the first six-way valve through the port 1# of the second six-way valve, and flowed at a flow rate of 1 mL/min into the separation resin of the first separation column through the common port C of the first six-way valve. As a result, a large amount of yttrium [⁹⁰Y] and a very small amount of strontium [⁹⁰Sr] attached to the separation resin. The third six-way valve was switched to the port 1#, such that a solution containing a large amount of strontium [⁹⁰Sr] and a very small amount of yttrium [⁹⁰Y] flowed into the third six-way valve through the common port C of the third six-way valve, and then flowed into the liquid inlet pipe of the evaporation-recovery device through the port 1# of the third six-way valve.
S3: 11 mL of a hydrochloric acid solution with a concentration of 1 mol/L was drawn by the first injection pump from the rinsing tank through the port 4# of the first six-way valve. The first six-way valve was switched to the port 6# and the second six-way valve was switched to the port 4#, such that a rinsing solution (i.e., the hydrochloric acid solution) flowed into the port 4# of the second six-way valve through the port 6# of the first six-way valve, and then flowed at a flow rate of 1 mL/min into the separation resin of the first separation column through the common port C of the second six-way valve to rinse off a trace amount of strontium [⁹⁰Sr] attached to the separation resin. The third six-way valve was switched to the port 1#, such that a solution containing a trace amount of strontium [⁹⁰Sr] flowed into the liquid inlet pipe of the evaporation-recovery device through the common port C and the port 1# of the third six-way valve.
S4: Strontium [⁹⁰Sr]-containing solutions collected in S2 and S3 flowed slowly at a flow rate of 1 mL/min into the evaporation dish through the liquid inlet pipe of the evaporation-recovery device, and subjected to evaporation at 90°C. A gas resulted from the evaporation was discharged through the small holes of the baffle plate. After all the solutions were completely evaporated, the 1 mol/L hydrochloric acid solution was drawn from the rinsing tank and added thereto to completely dissolve a solid remained, and a resulting system was left to stand for 10 d to produce a strontium [⁹⁰Sr]-yttrium [⁹⁰Y] rinsing solution. The strontium [⁹⁰Sr]-yttrium [⁹⁰Y] rinsing solution was added to the mother liquor tank for recycling.
S5: The first six-way valve was switched to the port 5#, such that a liquid in the first separation column was drained with air. 3 mL of a hydrochloric acid solution with a concentration of 8 mol/L was drawn by the second injection pump from the second elution tank through the port 2# of the first six-way valve. The first six-way valve was switched to the port 3# and the second six-way valve was switched to the port 3#, such that an eluent flowed into the port 3# of the second six-way valve through the port 3# of the first six-way valve, and then flowed at a flow rate of 1 mL/min into the separation resin of the first separation column through the common port C of the second six-way valve to elute the large amount of yttrium [⁹⁰Y] attached to the separation resin. The third six-way valve was switched to the port 2#, such that a solution containing a large amount of yttrium [⁹⁰Y] flowed into the second elution tank through the common port C and port 2# of the third six-way valve. An yttrium [⁹⁰Y] solution in the second elution tank was the yttrium [⁹⁰Y]-containing eluate collected.

### Comparative Example 6

In this comparative example, a method for separating yttrium [⁹⁰Y] from a strontium [⁹⁰Sr]-containing mother liquor was provided. This method was implemented with the generator in Example 1. A volume of a resin separation column was 1 mL. The 2nd mL to 3rd mL of an eluate was taken as a product solution.

Specifically, the method was composed of the following steps:
S1: 2 mL of a hydrochloric acid solution with a concentration of 1 mol/L was drawn by the first injection pump from the rinsing tank through the port 4# of the first six-way valve, and fed into a separation resin (a CL-P204 extraction chromatographic resin with a pore size of 40 mesh to 150 mesh) of the first separation column through the common port C of the first six-way valve to equilibrate the separation resin for an equilibration time of 5 min.
S2: 2 mL of an yttrium [⁹⁰Y]-containing strontium [⁹⁰Sr] mother liquor was drawn at a flow rate of 0.5 mL/min from the mother liquor tank through the port 2# of the second six-way valve. The second six-way valve was switched to the port 1# and the first six-way valve was switched to the port 1#, such that the yttrium [⁹⁰Y]-containing strontium [⁹⁰Sr] mother liquor entered the port 1# of the first six-way valve through the port 1# of the second six-way valve, and flowed at a flow rate of 1 mL/min into the separation resin of the first separation column through the common port C of the first six-way valve. As a result, a large amount of yttrium [⁹⁰Y] and a very small amount of strontium [⁹⁰Sr] attached to the separation resin. The third six-way valve was switched to the port 1#, such that a solution containing a large amount of strontium [⁹⁰Sr] and a very small amount of yttrium [⁹⁰Y] flowed into the third six-way valve through the common port C of the third six-way valve, and then flowed into the liquid inlet pipe of the evaporation-recovery device through the port 1# of the third six-way valve.
S3: 11 mL of a hydrochloric acid solution with a concentration of 1 mol/L was drawn by the first injection pump from the rinsing tank through the port 4# of the first six-way valve. The first six-way valve was switched to the port 6# and the second six-way valve was switched to the port 4#, such that a rinsing solution (i.e., the hydrochloric acid solution) flowed into the port 4# of the second six-way valve through the port 6# of the first six-way valve, and then flowed at a flow rate of 1 mL/min into the separation resin of the first separation column through the common port C of the second six-way valve to rinse off a trace amount of strontium [⁹⁰Sr] attached to the separation resin. The third six-way valve was switched to the port 1#, such that a solution containing a trace amount of strontium [⁹⁰Sr] flowed into the liquid inlet pipe of the evaporation-recovery device through the common port C and the port 1# of the third six-way valve.
S4: Strontium [⁹⁰Sr]-containing solutions collected in S2 and S3 flowed slowly at a flow rate of 1 mL/min into the evaporation dish through the liquid inlet pipe of the evaporation-recovery device, and subjected to evaporation at 90°C. A gas resulted from the evaporation was discharged through the small hole(s) of the baffle plate. After all the solutions were completely evaporated, the 1 mol/L hydrochloric acid solution was drawn from the rinsing tank and added thereto to completely dissolve a solid remained, and a resulting system was left to stand for 10 d to produce a strontium [⁹⁰Sr]-yttrium [⁹⁰Y] rinsing solution. The strontium [⁹⁰Sr]-yttrium [⁹⁰Y] rinsing solution was added to the mother liquor tank for recycling.
S5: The first six-way valve was switched to the port 5#, such that a liquid in the first separation column was drained with air. 3 mL of a hydrochloric acid solution with a concentration of 8 mol/L was drawn by the second injection pump from the second elution tank through the port 2# of the first six-way valve. The first six-way valve was switched to the port 3# and the second six-way valve was switched to the port 3#, such that an eluent flowed into the port 3# of the second six-way valve through the port 3# of the first six-way valve, and then flowed at a flow rate of 1 mL/min into the separation resin of the first separation column through the common port C of the second six-way valve to elute the large amount of yttrium [⁹⁰Y] attached to the separation resin. The third six-way valve was switched to the port 2#, such that a solution containing a large amount of yttrium [⁹⁰Y] flowed into the second elution tank through the common port C and port 2# of the third six-way valve. An yttrium [⁹⁰Y] solution in the second elution tank was the yttrium [⁹⁰Y]-containing eluate collected.

### Comparative Example 7

In this comparative example, a method for separating yttrium [⁹⁰Y] from a strontium [⁹⁰Sr]-containing mother liquor was provided. This method was implemented with the generator in Example 1, but the evaporation-recovery device in the generator did not include a baffle plate. A volume of a resin separation column was 1 mL. The 2nd mL to 3rd mL of an eluate was taken as a product solution.

Specifically, the method was composed of the following steps:
S1: 2 mL of a hydrochloric acid solution with a concentration of 1 mol/L was drawn by the first injection pump from the rinsing tank through the port 4# of the first six-way valve, and fed into a separation resin (a CL-P204 extraction chromatographic resin with a pore size of 40 mesh to 150 mesh) of the first separation column through the common port C of the first six-way valve to equilibrate the separation resin for an equilibration time of 5 min.
S2: 2 mL of an yttrium [⁹⁰Y]-containing strontium [⁹⁰Sr] mother liquor was drawn at a flow rate of 0.5 mL/min from the mother liquor tank through the port 2# of the second six-way valve. The second six-way valve was switched to the port 1# and the first six-way valve was switched to the port 1#, such that the yttrium [⁹⁰Y]-containing strontium [⁹⁰Sr] mother liquor entered the port 1# of the first six-way valve through the port 1# of the second six-way valve, and flowed at a flow rate of 1 mL/min into the separation resin of the first separation column through the common port C of the first six-way valve. As a result, a large amount of yttrium [⁹⁰Y] and a very small amount of strontium [⁹⁰Sr] attached to the separation resin. The third six-way valve was switched to the port 1#, such that a solution containing a large amount of strontium [⁹⁰Sr] and a very small amount of yttrium [⁹⁰Y] flowed into the third six-way valve through the common port C of the third six-way valve, and then flowed into the liquid inlet pipe of the evaporation-recovery device through the port 1# of the third six-way valve.
S3: 11 mL of a hydrochloric acid solution with a concentration of 1 mol/L was drawn by the first injection pump from the rinsing tank through the port 4# of the first six-way valve. The first six-way valve was switched to the port 6# and the second six-way valve was switched to the port 4#, such that a rinsing solution (i.e., the hydrochloric acid solution) flowed into the port 4# of the second six-way valve through the port 6# of the first six-way valve, and then flowed at a flow rate of 1 mL/min into the separation resin of the first separation column through the common port C of the second six-way valve to rinse off a trace amount of strontium [⁹⁰Sr] attached to the separation resin. The third six-way valve was switched to the port 1#, such that a solution containing a trace amount of strontium [⁹⁰Sr] flowed into the liquid inlet pipe of the evaporation-recovery device through the common port C and the port 1# of the third six-way valve.
S4: Strontium [⁹⁰Sr]-containing solutions collected in S2 and S3 flowed slowly at a flow rate of 1 mL/min into the evaporation dish through the liquid inlet pipe of the evaporation-recovery device, and subjected to evaporation at 90°C. A gas resulted from the evaporation was discharged through the small hole(s) of the baffle plate. After all the solutions were completely evaporated, the 1 mol/L hydrochloric acid solution was drawn from the rinsing tank and added thereto to completely dissolve a solid remained, and a resulting system was left to stand for 10 d to produce a strontium [⁹⁰Sr]-yttrium [⁹⁰Y] rinsing solution. The strontium [⁹⁰Sr]-yttrium [⁹⁰Y] rinsing solution was added to the mother liquor tank for recycling.
S5: The first six-way valve was switched to the port 5#, such that a liquid in the first separation column was drained with air. 3 mL of a hydrochloric acid solution with a concentration of 8 mol/L was drawn by the second injection pump from the second elution tank through the port 2# of the first six-way valve. The first six-way valve was switched to the port 3# and the second six-way valve was switched to the port 3#, such that an eluent flowed into the port 3# of the second six-way valve through the port 3# of the first six-way valve, and then flowed at a flow rate of 1 mL/min into the separation resin of the first separation column through the common port C of the second six-way valve to elute the large amount of yttrium [⁹⁰Y] attached to the separation resin. The third six-way valve was switched to the port 2#, such that a solution containing a large amount of yttrium [⁹⁰Y] flowed into the second elution tank through the common port C and port 2# of the third six-way valve. An yttrium [⁹⁰Y] solution in the second elution tank was the yttrium [⁹⁰Y]-containing eluate collected.

### Test Example

A content of strontium in a rinsing solution was determined by inductively coupled plasma-optical emission spectroscopy. Recovery rates of strontium [⁹⁰Sr] in Examples 4 to 7 and Comparative Examples 1 to 6 were calculated according to the following equation: recovery rate of strontium = 1 - (content of strontium [⁹⁰Sr] in an eluate/content of strontium [⁹⁰Sr] in a strontium-containing mother liquor). Test results of strontium [⁹⁰Sr] contents and recovery rates of strontium [⁹⁰Sr] are shown in Table 2.

**Table 2 Test results of strontium [⁹⁰Sr] contents and recovery rates of strontium [⁹⁰Sr]**

| | Sr/ppm | Recovery rate of strontium [⁹⁰Sr] (%) |
|---|---|---|
| Example 4 | 0.64 | 99.2 |
| Example 5 | 0.58 | 99.5 |
| Example 6 | 0.28 | 99.8 |
| Example 7 | 0.62 | 99.3 |
| Comparative Example 1 | 1.13 | 98.2 |
| Comparative Example 2 | 1.08 | 98.3 |
| Comparative Example 3 | 2.85 | 97.5 |
| Comparative Example 4 | 2.77 | 97.8 |
| Comparative Example 5 | 3.58 | 93.5 |
| Comparative Example 6 | 3.61 | 93.3 |
| Comparative Example 7 | 0.98 | 98.5 |

A radiochemical activity of yttrium [⁹⁰Y] in an eluate was measured by inductively coupled plasma-atomic emission spectrometry. Radiochemical activity test results of yttrium [⁹⁰Y] in eluates of Examples 4 to 6 and Comparative Examples 1 to 6 are shown in Table 3.

**Table 3 Radiochemical activities of yttrium [⁹⁰Y] in eluates**

| | Radiochemical activity of yttrium [⁹⁰Y] (GBq/mL) |
|---|---|
| Example 4 | 1.64×10⁻⁶ |
| Example 5 | 4.60×10⁻⁷ |
| Example 6 | 6.54×10⁻⁸ |
| Example 7 | 1.46×10⁻⁶ |
| Comparative Example 1 | 4.22×10⁻⁵ |
| Comparative Example 2 | 1.49×10⁻⁵ |
| Comparative Example 3 | 2.34×10⁻⁵ |
| Comparative Example 4 | 3.22×10⁻⁵ |
| Comparative Example 5 | 2.49×10⁻⁶ |
| Comparative Example 6 | 2.34×10⁻⁶ |
| Comparative Example 7 | 2.17×10⁻⁶ |

Conclusions: as can be seen from the comparison of data of Examples 4 to 6, the method of the present disclosure could reduce a strontium [⁹⁰Sr]-yttrium [⁹⁰Y] radioactivity in an yttrium [⁹⁰Y]-containing eluate by purifying the yttrium [⁹⁰Y]-containing eluate multiple times. As can be seen from the comparison of data of Example 4 and Comparative Examples 1 to 4, when the CL-P204 extraction chromatographic resin is selected as a separation resin in the first separation column, yttrium [⁹⁰Y] could be completely adsorbed on the resin, while strontium [⁹⁰Sr] flows out directly, and yttrium [⁹⁰Y] is then eluted, which could reduce a strontium [⁹⁰Sr]-yttrium [⁹⁰Y] radioactivity. As can be seen from the comparison of data of Example 4 and Comparative Examples 5 to 6, the temperature for the evaporation higher than 95°C results in reduced recovery rate of strontium [⁹⁰Sr], which is attributed to the occurrence of bumping during the evaporation. Strontium [⁹⁰Sr] is carried away by a steam to produce aerosols, leading to a loss of strontium [⁹⁰Sr]. The temperature for the evaporation lower than 85°C also results in reduced recovery rate of strontium [⁹⁰Sr]. When the temperature for the evaporation is too low, the evaporated strontium [⁹⁰Sr] crystal would adhere to a surface of the evaporation dish, leading to a loss of strontium [⁹⁰Sr].

Although the principle of the present disclosure has been described in detail above in conjunction with the preferred embodiments of the present disclosure, those skilled in the art should understand that the above embodiments are merely illustrative implementations of the present disclosure and do not limit the scope of the present disclosure. The details in the embodiments do not constitute a limitation to the scope of the present disclosure. Any obvious changes such as equivalent transformations or simple substitutions based on the technical solutions of the present disclosure without deviating from the spirit and scope of the present disclosure fall within the scope of the present disclosure.

## Claims

1. A method for separating yttrium [⁹⁰Y] from a strontium [⁹⁰Sr]-containing mother liquor, comprising the following steps:
S1, allowing the strontium [⁹⁰Sr]-containing mother liquor to flow through a resin separation column, such that yttrium [⁹⁰Y] in the strontium [⁹⁰Sr]-containing mother liquor is adsorbed; rinsing off strontium [⁹⁰Sr] on the resin separation column with a rinsing solution, and collecting a strontium [⁹⁰Sr]-containing rinsing solution; and draining a liquid in the resin separation column with air;
S2, subjecting the strontium [⁹⁰Sr]-containing rinsing solution to evaporation at a temperature of 85°C to 95°C to produce a crystal of strontium [⁹⁰Sr]; dissolving the crystal with the rinsing solution, and leaving a resulting solution to stand for 8-12 days; and collecting a corresponding rinsing solution, and adding the corresponding rinsing solution to the strontium [⁹⁰Sr]-containing mother liquor for recycling; and
S3, eluting the yttrium [⁹⁰Y] from the resin separation column with an eluent, and collecting an yttrium [⁹⁰Y]-containing eluate,
wherein in the yttrium [⁹⁰Y]-containing eluate, a strontium [⁹⁰Sr]-yttrium [⁹⁰Y] radioactivity ratio is lower than 10⁻⁶.

2. The method for separating yttrium [⁹⁰Y] from the strontium [⁹⁰Sr]-containing mother liquor as claimed in claim 1, further comprising: subjecting the yttrium [⁹⁰Y]-containing eluate to adsorption with at least one resin separation column, eluting with the eluent, and collecting a purified yttrium [⁹⁰Y]-containing eluate.

3. The method for separating yttrium [⁹⁰Y] from the strontium [⁹⁰Sr]-containing mother liquor as claimed in claim 2, wherein in the purified yttrium [⁹⁰Y]-containing eluate produced after subjecting the yttrium [⁹⁰Y]-containing eluate to adsorption with one resin separation column and eluting with the eluent, a strontium [⁹⁰Sr]-yttrium [⁹⁰Y] radioactivity ratio is lower than 10⁻⁷.

4. The method for separating yttrium [⁹⁰Y] from the strontium [⁹⁰Sr]-containing mother liquor as claimed in claim 2, wherein in the purified yttrium [⁹⁰Y]-containing eluate produced after subjecting the yttrium [⁹⁰Y]-containing eluate to adsorption with two resin separation columns and eluting with the eluent, a strontium [⁹⁰Sr]-yttrium [⁹⁰Y] radioactivity ratio is lower than 10⁻⁸.

5. The method for separating yttrium [⁹⁰Y] from the strontium [⁹⁰Sr]-containing mother liquor as claimed in claim 1, wherein a total volume of the rinsing solution used is at least 11 times a volume of the resin separation column;
the rinsing is conducted at a rate of 0.25-1 mL/min;
the rinsing solution has a concentration of 1 mol/L, and the rinsing solution is one selected from the group consisting of nitric acid, sulfuric acid, and hydrochloric acid; and
the eluent has a concentration of 8 mol/L, and the eluent is one selected from the group consisting of nitric acid, sulfuric acid, and hydrochloric acid.

6. A generator for separating yttrium [⁹⁰Y] from a strontium [⁹⁰Sr]-containing mother liquor, comprising a mother liquor tank, a rinsing tank, a first elution tank, a second elution tank, an automatic separation device, and an evaporation-recovery device, wherein
the automatic separation device comprises a first separation column, a communication device, a first injection pump, and a second injection pump;
the communication device is configured to selectively communicate with the mother liquor tank, the rinsing tank, the first elution tank, the second elution tank, the first separation column, the first injection pump, and the second injection pump;
the mother liquor tank is configured to supply the strontium [⁹⁰Sr]-containing mother liquor to the first separation column such that yttrium [⁹⁰Y] in the strontium [⁹⁰Sr]-containing mother liquor is adsorbed on the first separation column;
the first injection pump is configured to draw a rinsing solution from the rinsing tank to rinse the first separation column such that strontium [⁹⁰Sr] adsorbed on the first separation column is rinsed off and delivered in a solution form to the evaporation-recovery device;
the second injection pump is configured to draw an eluent from the first elution tank to conduct elution on the first separation column such that yttrium [⁹⁰Y] adsorbed on the first separation column is eluted and delivered in a form of a solution to the second elution tank; and
a resin in the first separation column is a CL-P204 extraction chromatographic resin with a pore size of 40-150 mesh.

7. The generator for separating yttrium [⁹⁰Y] from the strontium [⁹⁰Sr]-containing mother liquor as claimed in claim 6, wherein the evaporation-recovery device comprises a liquid inlet pipe, an evaporation dish, a baffle plate, a liquid outlet, and a heating device;
the baffle plate is located inside the evaporation dish and is configured to prevent splashing of a strontium [⁹⁰Sr] solution during evaporation, and the baffle plate is provided with a small hole to discharge a gas resulted from evaporation;
the liquid inlet pipe penetrates through the baffle plate; and one end of the liquid inlet pipe is connected to the communication device and the rinsing tank, and an other end of the liquid inlet pipe is suspended above a bottom of the evaporation dish;
the liquid outlet is configured at a side of an outer surface of the evaporation dish and is connected to the mother liquor tank; and
the heating device is located at the bottom of the evaporation dish and is configured to heat the strontium [⁹⁰Sr] solution in the evaporation dish.

8. The generator for separating yttrium [⁹⁰Y] from the strontium [⁹⁰Sr]-containing mother liquor as claimed in claim 1, wherein the communication device comprises a first six-way valve, a second six-way valve, and a third six-way valve;
the first six-way valve has a common port C connected to a liquid inlet of the first separation column, a port 1# connected to a port 1# of the second six-way valve, a port 2# connected to the first elution tank through the second injection pump, a port 3# connected to a port 3# of the second six-way valve, a port 4# connected to the rinsing tank through the first injection pump, a port 5# connected to air, and a port 6# connected to a port 4# of the second six-way valve;
the second six-way valve has a port 2# connected to the mother liquor tank, and a common port C connected to the liquid inlet of the first separation column; and
a common port C of the third six-way valve is connected to a liquid outlet of the first separation column, a port 1# of the third six-way valve is connected to a liquid inlet pipe of the evaporation-recovery device, and a port 2# of the third six-way valve is connected to the second elution tank.

9. The generator for separating yttrium [⁹⁰Y] from the strontium [⁹⁰Sr]-containing mother liquor as claimed in claim 1, further comprising: at least one separation column, configured to conduct a further elution by using an yttrium [⁹⁰Y] solution produced from the elution on the first separation column, wherein a liquid inlet of each of the at least one separation column is connected to the first elution tank; and
a resin in each of the at least one separation column is the CL-P204 extraction chromatographic resin.

10. The generator for separating yttrium [⁹⁰Y] from the strontium [⁹⁰Sr]-containing mother liquor as claimed in claim 1, wherein the generator further comprises a control unit, the control unit being in a signal connection with the communication device, the first injection pump, and the second injection pump;
a liquid-contact material for the communication device is one selected from the group consisting of polychlorotrifluoroethylene and sapphire;
a material of the evaporation dish is polyetheretherketone; and
the first injection pump and the second injection pump each have a liquid volume accuracy error of less than 1%.
